# EUROPEAN PATENT APPLICATION

(11) **EP 1 180 894 A1**
(43) Date of publication of application: **20.02.2002**
(21) Application number: 00117888.8
(22) Date of filing: 19.08.2000
(51) Int. Cl.: H04M 17/00, H04M 17/02

(54) **Account information controller**

(71) Applicant: Yozan Inc., Tokyo 155-0031 (JP)
(72) Inventor: Takatori, Sunao, c/o Yozan Inc., Tokyo 155-0031 (JP); Yamamoto, Matoto, Yokohama-shi, Kanagawa 223-0056 (JP)
(74) Representative: Grosse, Rainer, Dipl.-Ing.

(57) **Abstract**

The present invention offers an account information controller, which ensures reliable account, without impairing features of the mobile communication.

An account information controller is designed to input prepayment information and record it in advance; connect to a mobile station for mobile communication; input account information from the mobile station depending on how many times the mobile station has been used; generate settlement information by comparing the account information with the prepayment information; and control the mobile station according to the settlement information.

## Description

### BACKGROUND OF THE INVENTION

### 1. Field of the Invention

The present invention relates to an account information controller for a mobile station for mobile communication.

### 2. Description of the Related Arts

Generally, to bill for mobile communication using a PDC (personal digital cellular), a PHS (personal handy phone system) and so on, they should be registered in advance. Simple services such as pay phones and prepayment cards (telephone cards) in the wireline telephone network have not so far been offered to mobile communication. However, installing an account device in the mobile station for the mobile communication leads to a larger and more complex equipment, and results consequently in higher power consumption. Moreover, if the mobile station is used under the control of a fixed account system, reliability of the account system would increase. On the contrary, features of the mobile communication will be impaired.

### 3. Summary of the Invention

The present invention has been made to solve the above conventional problems to offer an account information controller which ensure reliable account, without impairing features of the mobile communication.

The account information controller according to the present invention is designed to input prepayment information and record it in advance; connect to a mobile station for the mobile communication; input account information from the mobile station, which differs depending on how many times the mobile station has been used; and generate settlement information by comparing the account information with the prepayment information to control the mobile station based on the settlement information.

### BRIEF DESCRIPTION OF THE DRAWINGS

FIG. 1 is a perspective view of a first embodiment of an account information controller according to the present invention, which is connected to a mobile station.

FIG. 2 is a block diagram of an account information controller according to the present invention as an association map between the controller and other system elements.

FIG. 3 is a functional block diagram of an account information controller.

FIG. 4 is an internal block diagram showing an account information controller.

FIG. 5 is a functional block diagram showing a second embodiment of the account information controller according to the present invention.

FIG. 6 is a flow chart showing processing of an account information controller.

### DETAILED DESCRIPTION OF THE INVENTION

Preferred embodiments of an account information controller according to the present invention will be described with reference to the drawings.

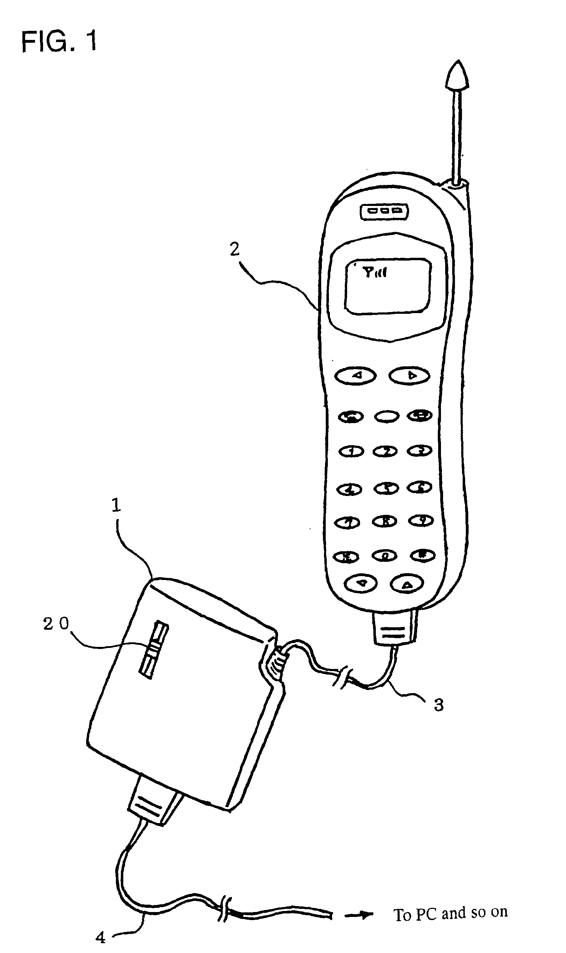

FIG. 1 is a perspective view of a first embodiment of an account information controller according to the present invention, which is connected to a mobile station. An account information controller 1 is connected to a mobile station 2 through a connecting cable 3. The controller 1 retains prepayment information for the mobile communication system, and gathers account information indicating the amounts of usage of the mobile station 2 through the connecting cable 3. The controller 1 generates settlement information by comparing the prepayment information with the account information. When settlement amount reduces to a small extent, the mobile station 2 generates alarm information. When the settlement amount becomes zero, the mobile station is brought into stop condition. In addition, the controller 1 may be connected to a connecting cable 4, through which the controller 1 may be connected to a prepayment information management system and a personal computer (PC).

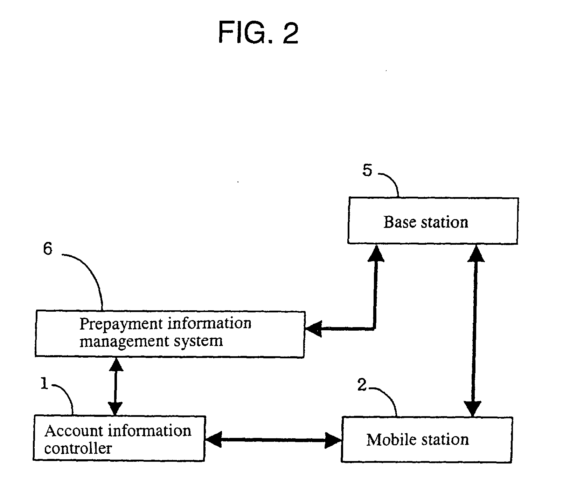

FIG. 2 is a block diagram of the account information controller 1 showing an association map between the controller and other system elements. The input of the prepayment information to the controller 1 is controlled by the prepayment information management system 6 under connection of the controller 1 to the management system 6. The prepayment information is input, for example, through operations such as paying-in of a user to an automatic payment system, and operation of the management system 6 by a service provider. Communication with the mobile station 2 is performed through a base station 5 in the mobile communication system, and the account information is timely sent from the base station 5 to the mobile station 2. On the other hand, the management system 6 communicates with the base station 5 to decide whether the controller 1 is operated properly or not.

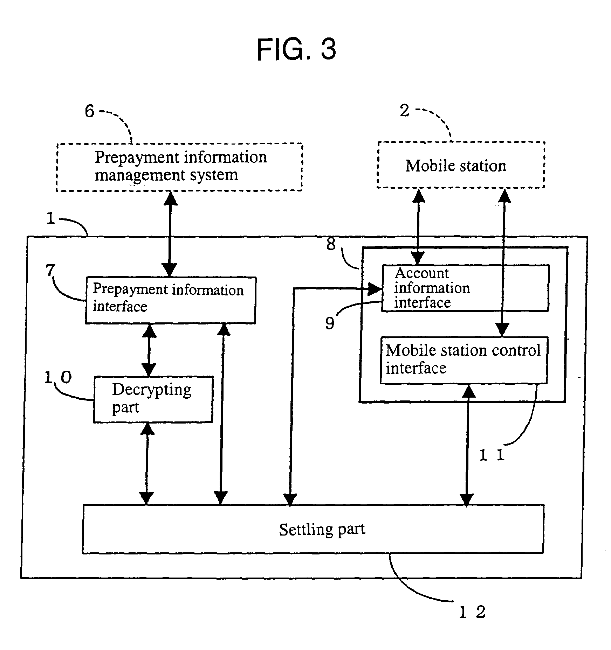

FIG. 3 is a functional block diagram showing an association map between functional blocks within the controller 1, including their connection to the management system 6 and the mobile station 2. The controller 1 has a prepayment information interface 7 and a mobile station interface 8, and is connected to the management system 6 through the prepayment information interface 7 and to the mobile station 2 through the mobile station interface 8. A decrypting part 10 is connected to the prepayment information interface 7. The decrypting part 10 and the mobile station interface 8 are connected to a settling part 12.

The management system 6 identifies the controller 1, to which the prepayment information is input in a form of a cryptogram which the controller 1 is able to decrypt. The controller 1 is identified by inquiry of an ID (identifier) at the base station 5. The ID is output automatically by the controller 1, or is input by the user or a service provider. The former protocol is shown in Table 1. First, the controller 1 transmits the ID to the management system 6 for checking the ID by the inquiry and so on. Then, from the base station, the management system 6 obtains an encryption key for decryption in the controller 1, and the user or the service provider performs operations in connection with paying-in, on which the management system 6 generates the prepayment information on a predetermined format to be input to the controller 1. The management system 6 encrypts the prepayment information with the above encryption key to input it to the controller 1.

**Table 1.**

| Communication between account information controller and prepayment information management system | |
|---|---|
| Account information controller | |
| | Prepayment information management system |
| 1-1 | Send ID |
| 2-1 | Receive ID Check ID |
| 1-2 | Pay in |
| 2-2 | Generate prepayment information |
| 2-3 | Encrypt prepayment information |
| 2-4 | Send encrypted prepayment information |
| 1-3 | Receive encrypted prepayment information |
| 1-4 | Decrypt prepayment information |

The controller 1 decrypts the encrypted prepayment information at the decrypting part 10 to input it to the settling part 12. On the other hand, the mobile station interface 8 has an account information interface 9 and a mobile station control interface 11. The above account information is input from the account information interface 9 to the controller 1 at a predetermined cycle. The account information is then input from the account information interface 9 to the settling part 12 which subtracts an amount shown in the account information from an amount shown in the prepayment information to calculate a current remainder in a prepayment amount. When the remainder reaches a predetermined amount, the mobile station 2 is controlled by the mobile station interface 11 to generate the above alarm information. In addition, when the remainder reduces to 0 after subtraction, the controller 1 stops the communication with the mobile station 2 through the mobile station interface 11.

When the mobile station 2 is connected to the controller 1, the controller 1 governs the mobile station 2, and when the mobile station 2 is disconnected from the controller 1, it returns to usual usage, that is, usual account conditions based on a previously-made contract.

The prepayment amount is input beforehand to the controller 1 by the user who regularly bought the controller 1, or the controller 1 is sold with the prepayment amount previously stored. Accordingly, it eliminates the need to provide the mobile station 2 with an additional account device, and obviates a particular contract for the mobile communication system. Thereby, it becomes possible to secure reliable account without impairing features of the mobile communication. In addition, the controller 1 is sure to give the prepayment information to the settling part 12 through the decrypting part 10. Therefore, illegal input of the prepayment information becomes extremely difficult, and also promotes reliability of account.

Alternatively, it is possible to adopt the public key cryptography as the encryption pattern, that is, it is possible to encrypt the prepayment information by the management system 6 with the public encryption key output from the controller 1 and to input it to the controller 1.

The controller 1 decrypts the prepayment information with a decryption key corresponding to the encryption key to input the decrypted information to the settling part 12. If the prepayment information cannot be decrypted because of illegal use of the controller 1, the use of the mobile station 2 through the controller 1 is impossible, as the prepayment information is not input to the controller 1.

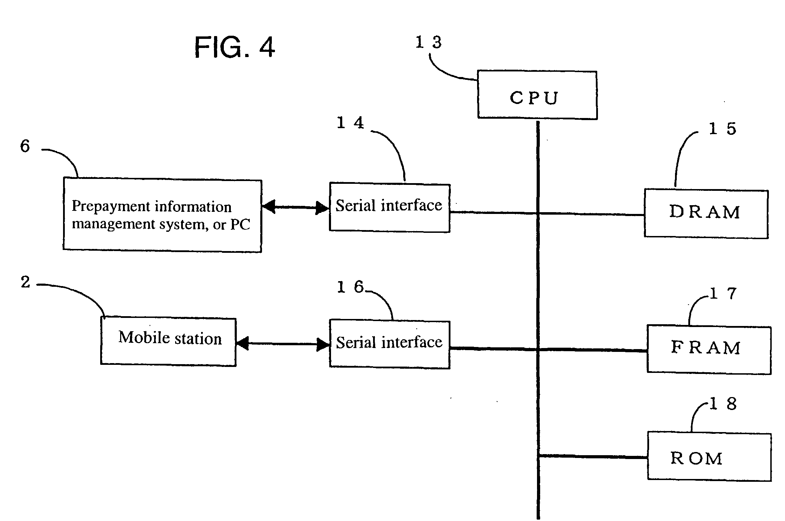

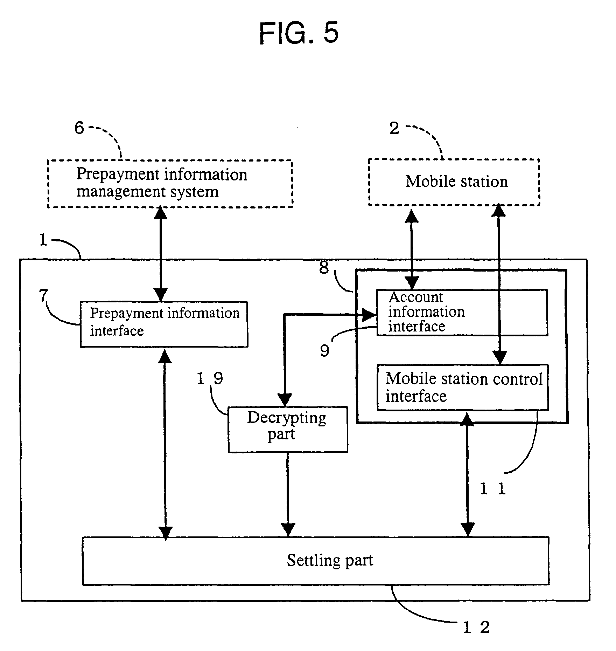

FIG. 4 is an internal block diagram showing the controller 1 with a CPU (central processing unit) 13, a DRAM (dynamic random access memory) 15, a FRAM (ferroelectric random access memory) 17, a ROM (read-only memory) 18, and serial interfaces 14 and 16. The above prepayment information interface 7 and the above mobile station interface 11 consist of general-purpose serial interfaces 14 and 16, respectively. When the serial interfaces 14 and 16 are disconnected from the management system 6, the controller 1 may be connected to a PC (personal computer, not shown) and so on. Since the mobile station 2 is generally provided with only one connection terminal, it is unfeasible to connect other devices directly to the mobile station 2, when the controller 1 is connected. However, the use of the serial interface 14 and the connection cable 4 allows connection of PC and so on to the mobile station 2. In a functional block diagram of FIG. 5, the prepayment information interface 7 is expressed as an interface dedicated only for the management system 6, but may be easily used as an interface for other devices, wherein setting which varies depending on the type of connected devices may be made, using a slide switch 20 (FIG. 1). The controller 1 is provided with a modulator-demodulator (not shown) in order to input a digital signal of the personal computer to the mobile station.

The CPU 13 performs all the operations of the controller 1, such as decryption processing, generation of the settlement information, control of the mobile station, bus arbitration, communication control of serial interfaces 14 and 16, and read/write control of the memories 15, 17 and 18. The ROM 18 stores necessary information such as microprograms, a decryption key, and an encryption key in the public key cryptography. The FRAM 17 retains the prepayment information and/or the settlement information, and no power supply is required to retain such data. Therefore, there is no electric power consumption for retaining the prepayment information, or information based on the prepayment information. Thereby, the controller 1 consumes less electricity. The DRAM is used, for example, as a cache memory for input/output data and operation data and so on.

FIG. 5 is a functional block diagram corresponding to FIG. 3 showing a second embodiment of the controller. In this embodiment, the same reference numbers and designations in Fig.5 indicate corresponding elements as those in the first embodiment. In FIG. 5, a decrypting part 19 is provided between the account information interface 9 and the settling part 12, instead of the decrypting part 10 in the first embodiment. The account information is supplied to the controller 1 at a predetermined cycle. The account information may not be decrypted when the regular type controller 1 is not utilized. Thereby, the periodical provision of the account information may not be occurred. In this way, the fault detection in the account information can prevent illegal use of the controller.

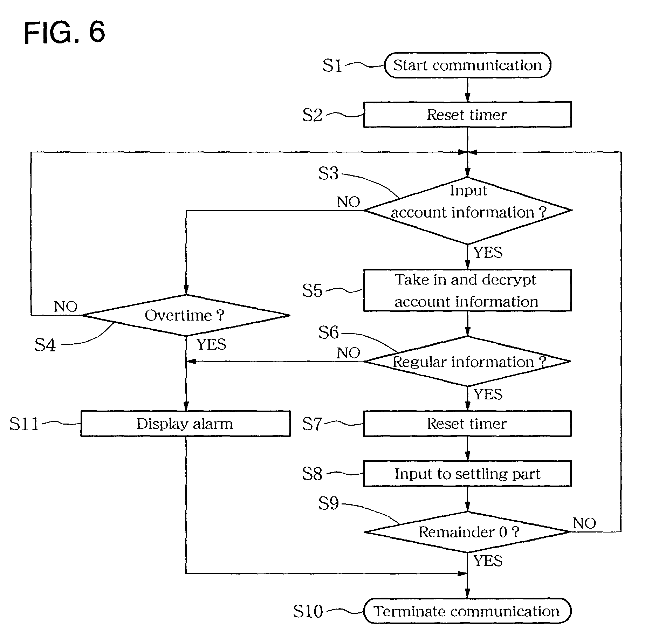

FIG. 6 is a flow chart showing processing of the controller 1 in the second embodiment. The controller 1 detects faults of the account information, using an internal timer (not shown). Starting communication (Step S1) resets the timer once (Step S2). It is decided whether the account information is input from the mobile station 2 or not (Step S3). It is decided whether a predetermined time has passed or not when the account information is not input (Step S4). When the account information is input, the account information is taken in and decrypted (Step S5). Then, it is decided whether the format and the content of the decrypted account information are correct or not (Step S6). If they are correct, the timer is reset (Step S7) to input the account information to the settling part 12 (Step S8). The settling part 12 calculates the remainder of the prepayment amount by generating the settlement information from the prepayment information and the account information, and it is decided whether the remainder is 0 or not (Step S9). If the remainder is 0, the communication is terminated (Step S10). If the remainder is not 0, returning again to the decision step (Step 3). When it is decided at the above Step S4 that the predetermined time has passed (overtime), or at the above Step 6 that they are not correct, the communication is terminated (Step S10), after an alarm is displayed (Step S11).

When the mobile station 2 communicates with another mobile station, the base station 5 may be able to get information on not only the mobile station 2 but also the controller 1, and to send to the mobile station an encryption key corresponding to the controller 1. Thereby, a safe encryption key sending may be accomplished. In addition, it is obvious that the encryption and the decryption may be realized only by establishing an encryption as the public key cryptography in a similar way to the above, and by sending and receiving the public key between the controller 1 and the mobile station. Encryption of both the prepayment information and the account information may be possible by installing both the decryption parts 10 and 19. The above prepayment information may include a piece of prepayment information related with the mobile station 2, and, further, other types of prepayment information, other than that of communication charges.

The account information controller according to the present invention is designed to input the prepayment information and record it in advance; connect to the mobile station for the mobile communication, input account information from the mobile station, which differs depending on how many times the mobile station has been used; generate the settlement information by comparing the account information with the prepayment information; and control the mobile station according to the settlement information. Thereby, the controller has an excellent effect making possible to secure reliable account, without impairing features of the mobile communication.

## Claims

1. An account information controller connectable to a prepayment information management system which manages prepayment information corresponding to a mobile station of a mobile communication system, and to said mobile station comprising:
a prepayment information interface connectable to said prepayment information management system, and to which prepayment information is input sent from said prepayment information management system;
an account information interface connectable to said mobile station, and to which account information is input from said mobile station, which is charged according to the usage of said mobile station;
a settling part generating settlement information by inputting said prepayment information output from said prepayment information interface, and said account information output from said account information interface, and comparing them; and
a mobile station control interface controlling the operation of said mobile station by inputting said settlement information output from said settling part.

2. An account information controller according to claim 1, a decrypting part is further provided, and said decrypting part decrypts the encrypted prepayment information input through said prepayment information interface.

3. An account information controller according to claim 1, a decrypting part is further provided, and said decrypting part decrypts the encrypted account information input through said account information interface.

4. An account information controller according to claim 1, a modulator-demodulator for communicating with said mobile station is further provided.

5. An account information controller according to claim 1, a ferroelectric memory is further provided, and in which said prepayment information, account information, or settlement information has been stored.
